(19) Europäisches Patentamt
European Patent Office
Office européen des brevets

(11) Veröffentlichungsnummer: **0 324 343**
**A2**

# (12) EUROPÄISCHE PATENTANMELDUNG

(21) Anmeldenummer: **89100025.9**

(51) Int. Cl.4: **C08F 8/00**

(22) Anmeldetag: **03.01.89**

(30) Priorität: **12.01.88 DE 3800578**

(43) Veröffentlichungstag der Anmeldung:
**19.07.89 Patentblatt 89/29**

(84) Benannte Vertragsstaaten:
**BE DE FR GB IT**

(71) Anmelder: **BASF Aktiengesellschaft**
**Carl-Bosch-Strasse 38**
**D-6700 Ludwigshafen(DE)**

(72) Erfinder: **Naarmann, Herbert, Dr.**
**Haardtblick 15**
**D-6719 Wattenheim(DE)**
Erfinder: **Koehler, Gernot, Dr.**
**Calvinstrasse 7c**
**D-6520 Worms 1(DE)**

## (54) Modifiziertes Polyacetylen.

(57) Polyacetylen, dadurch gekennzeichnet, daß es durch Reaktion mit einer dienophilen Verbindung modifiziert ist, seine Herstellung und Verwendung zur Herstellung von Formkörpern durch thermoplastische Verarbeitung.

EP 0 324 343 A2

## Modifiziertes Polyacetylen

Die Erfindung betrifft Polyacetylen.

Polyacetylen ist an sich seit langem bekannt und in J. C. Chien, "Polyacetylene", Academic Press, 1984 oder in H. Naarmann, Synthetic Metals, 17 (1987), 223 beschrieben. Es wird im allgemeinen durch Polymerisation von Acetylen in Gegenwart von Ziegler-Katalysatoren aus aluminium- und titanorganischen Verbindungen oder von nickelorganischen oder Kobaltverbindungen bei Temperaturen von etwa -100 bis etwa +100 °C hergestellt. Solche Verfahren sind z.B. in

(1) H. Shirakawa et. al., JA 32581 (1973) J. Polymer Sci., Polymer Chem. Bd. 12 (1974), 11 Polym. J. Vol. 2/2 (1971), 231,

(2) F. Beck, Ber. der Bunsengesellschaft, Bd. 68, Nr. 6 (1964), 558,

(3) G. Wegner, Z. Naturforschung, 24b (1969), 824,

(4) L.B. Luttinger, Chem. and Ind., 3. September (1960), 1135,

(5) W. Reppe et al., Ann. Chem., 560, 1, (1948), 104 und

(6) M. Hatano J. Polym. Sci., 51 (1961), 26

beschrieben.

Unter Polyacetylen im Sinne dieser Erfindung werden Polymerisate aus den bekannten Mono-, Di- und/oder Oligoalkinen verstanden.

Zu den Monoalkinen gehört neben z.B. Propin, Butin, Pentin, Hexin, Heptin, Octin, Decin und Phenylacetylen insbesondere das Acetylen selbst. Die Monoalkine können auch substituiert sein und z.B. eine oder mehrere C-C-Doppelbindungen enthalten, wie z.B. 3-Methylbuten-3-in-1, Buten-1-in-3 oder die mit Phenylen-Derivaten substituierten Acetylene. Beispiele für Di- oder Polyalkine sind Butadiin, Hexadiin, Octadiin, Diethinylbenzol, 1,3,5-Triethinylbenzol oder 1,2,4-Triethinylbenzol. Die Di- oder Polyalkine können ebenfalls substituiert sein. Die Alkine können allein oder in Mischung miteinander eingesetzt werden.

Besonders bevorzugt wird als Monomeres in dem erfindungsgemäßen Verfahren Acetylen eingesetzt. Als günstig haben sich auch Monomer-Mischungen aus Acetylen und anderen Monoalkinen und/oder Di- und/oder Polyalkinen erwiesen. Diese Mischungen enthalten im allgemeinen neben dem Acetylen bis zu 50 Mol.%, vorzugsweise zwischen 5 und 20 Mol.%, der anderen Alkine. Eine bevorzugte Monomerenkombination ist ein Gemisch aus Acetylen und 3-N-(Phenalen-1′-on-9′-yl)-aminopropin-1 oder (Benzaldehyd-propargylamin)azomethin, wobei diese Mischungen vorteilhaft 10 bis 90 Mol.% Acetylen enthalten. Gleichermaßen sind auch Monomergemische aus Acetylen und anderen Comonomeren, wie Butadien, geeignet, die 1 bis 10 Mol.% der anderen Comonomeren enthalten.

Bekanntes Polyacetylen ist zwar durch Recken orientierbar, hat jedoch den entscheidenden Nachteil, daß es nicht thermoplastisch verarbeitbar ist, da es auch unter Schutzgas nicht so hoch erhitzt werden kann, daß es erweicht oder schmilzt.

Aufgabe der vorliegenden Erfindung war es daher, modifiziertes Polyacetylen bereitzustellen, das thermoplastisch verarbeitbar ist.

Demgemäß wurde Polyacetylen gefunden, das durch Reaktion mit einer dienophilen Verbindung modifiziert ist. Bevorzugte Ausgestaltungen der Erfindung sind den Unteransprüchen zu entnehmen.

Weiterhin wurde ein Verfahren zur Modifizierung von Polyacetylen und die Verwendung des modifizierten Polyacetylens zur Herstellung von Formkörpern durch thermoplastische Verarbeitung gemäß der Unteransprüche 4 und 5 gefunden.

Unter Modifizierung des Polyacetylens wird die Reaktion bzw. die Umsetzung zumindest eines Teils der dienophilen Verbindung mit dem Polyacetylen verstanden.

Dienophile Verbindungen im Sinne dieser Erfindung sind solche Stoffe, die in der Diels-Alder-Reaktion mit einem Dien reagieren können (s. z.B. L. F. Fieser und M. Fieser "Organische Chemie", Verlag Chemie, 1965, S. 238 bis 245).

Beispielsweise seien als dienophile Verbindungen genannt Maleinsäure, Maleinimid, das am Stickstoff durch Alkyl, Cycloalkyl oder Aryl mit bis zu 12 C-Atomen substituiert sein kann, die entsprechenden Maleinsäureamide, Maleinsäureanhydrid, Zimtaldehyd, Cyclopentadien, 1,3-Cyclohexadien, Dichlor- und Dibrommaleinsäure und die entsprechenden Maleinsäureamide. Gute Erfolge werden mit Dibrommaleinsäureanhydrid, Dichlormaleinsäureimid und Dibrommaleinsäureimid erzielt. Die Imidgrundkörper werden bevorzugt, daneben kann der Stickstoff der Imide auch durch Alkyl-, Cycloalkyl- oder Arylgruppen mit bis zu 12 C-Atomen substituiert sein. Gute Ergebnisse werden erzielt, wenn man als dienophile Verbindung Chinon, Halogen- und Dihalogenchinon, wobei Halogen Chlor oder Brom ist, wie z.B.

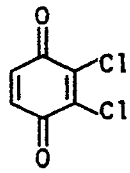 ,

Aminochinon I und Triazolinderivate II verwendet,

I 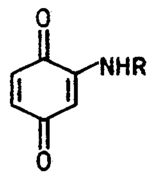 II 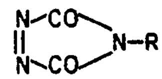

wobei R Alkyl-, Cycloakyl- oder Arylgruppen mit bis zu 12 C-Atomen, die ihrerseits durch $NO_2$, Chlor oder Brom substituiert sein können, oder insbesondere Wasserstoff darstellt. Als besonders bevorzugte Verbindung sei Dichlormaleinsäureanhydrid genannt.

Die Mengen, in denen die dienophile Verbindung bei der Modifizierung des Polyacetylens eingesetzt wird, hängen vom gewünschten Erfolg ab und lassen sich in einigen Vorversuchen leicht ermitteln. Gute Ergebnisse werden nach den bisherigen Erfahrungen erzielt, wenn das Gewichtsverhältnis Dienophil zu Polyacetylen 1:2 bis 2:1, insbesondere zwischen 0,8:1 bis 1:0,8 liegt.

Im allgemeinen wird die Modifizierung in Lösungsmitteln, die für die Diels-Alder-Reaktion üblich sind, durchgeführt. Gut geeignet sind aromatische Kohlenwasserstoffe wie Xylole, Kresole und insbesondere Toluol. Die Reaktionstemperaturen sind in weiten Bereichen einstellbar. Bevorzugt wird zwischen 20 und 120 °C gearbeitet. Es hat sich als vorteilhaft erwiesen, unter Inertbedingungen, d.h. unter Schutzgas wie Stickstoff oder Argon zum weitgehenden Ausschluß von Sauerstoff, worunter eine Sauerstoffkonzentration von unter 0,0001 Vol.% im Gas verstanden wird, zu arbeiten, um unerwünschte Oxidationsreaktionen weitgehend zu vermeiden. Die Reaktion wird im allgemeinen nach 2 bis 20 Stunden beendet.

Das erfindungsgemäße modifizierte Polyacetylen ist thermoplastisch verarbeitbar, insbesondere wenn die Erweichungstemperatur des modifizierten Polyacetylens unter 190 °C liegt. Aus ihm können daher durch z.B. Extrusion oder Spritzguß Formkörper hergestellt werden. Es versteht sich dabei von selbst, daß bei der thermoplastischen Verarbeitung unter Inertbedingungen, wie bei der Modifizierung des Polyacetylens beschrieben, gearbeitet werden muß.

Vor oder nach der Verarbeitung zu Formkörpern kann das modifizierte Polyacetylen in üblicher Art mit bekannten Dotierungsmitteln dotiert werden. Die Dotierungsverfahren sind in der Literatur beschrieben. In diesem Zusammenhang wird insbesondere auf die EP-A-36 118 verwiesen. Bevorzugt haben sich Jod und Arsen-Pentafluorid als Dotierungsmittel bewährt. Grundsätzlich können jedoch alle in der EP-A-36 118 aufgeführten Dotierungsmittel verwendet werden. In dieser Art können elektrisch leitfähige Formkörper erhalten werden.

Beispiel 1

Synthese von Polyacetylen:

Wie in der Lit. (1) beschrieben, werden die Wandungen eines Glasrohres bei -78 °C mit aktivem Ziegler-Kontakt aus 15 ml einer 20 %igen Aluminiumtriethyl-Lösung in Toluol und 1,8 ml Titantetrabutylat benetzt. Danach läßt man 500 Nml Acetylen bei -78 °C abreagieren. Die Extraktion des im Film eingeschlossenen Ziegler-Kontakts erfolgt mit n-Pentan; jeder Extraktionsschritt dauert 20 min. Die anschließende Trocknung des Films erfolgt bei -78 °C bis zu einem Druck von $10^{-2}$mb.

Modifizierung

10 g des Polyacetylen-Films wurden in 1 kg Toluol unter Argon mit 10 g Dichlormaleinsäureanhydrid 6

Stunden bei 110° C gerührt. Anschließend wurde das modifizierte Polyacetylen mit frischem Toluol gewaschen. Das Produkt hat einen Chlorgehalt von 1,7 Gew.%.

Das modifizierte Polyacetylen hatte folgende Eigenschaften:

Erweichungstemperatur gemessen unter Argon: 180° C Elektrische Leitfähigkeit: $3{,}5 \cdot 10^{-4}$ S/cm.

Die Erweichungstemperatur wurde wie folgt gemessen: Eine Probe des modifizierten Polyacetylens wurde in ein Reagenzglas gefüllt und ein Thermometer auf die Probe gestellt, so daß es frei beweglich ist.

Nach Aufheizen auf 100° C wurde mit einer konstanten Rate von 5° C pro Minute aufgeheizt und dabei Probe und Thermometer mit einer Lupe beobachtet.

Als Erweichungstemperatur wurde die Temperatur genommen, bei der die Thermometerkappe beginnt, in die Probe einzusinken. Die Messung wurde unter Schutzgas durchgeführt.

Das modifizierte Polyacetylen wurde wie folgt dotiert:

Das Polyacetylen wurde eine Stunde lang in einer gesättigten Lösung von Jod in Kohlenstofftetrachlorid dotiert (2,65 g Jod in 100 ml Kohlenstofftetrachlorid bei 25° C). Danach wurde dreimal mit Kohlenstofftetrachlorid je zwei Minuten lang gewaschen, anschließend in einem Argonstrom 20 Minuten lang getrocknet und dann 1 Stunde lang bei 30° C ein Vakuum von 0,1 bar angelegt.

Danach betrug die elektrische Leitfähigkeit 180 S/cm.

Beispiel 2

Es wurde wie in Beispiel 1 verfahren, jedoch wurde ein mit einem Reckungsgrad von 550 % gerecktes Polyacetylen eingesetzt.

Der Chlorgehalt des Produktes betrug 2,2 Gew.%, der Erweichungspunkt lag bei 178° C, die elektrische Leitfähigkeit bei $2{,}1 \cdot 10^{-5}$ S/cm vor dem Dotieren und nach dem Dotieren wie in Beispiel 1 bei 2500 S/cm.

## Ansprüche

1. Polyacetylen, dadurch gekennzeichnet, daß es durch Reaktion mit einer dienophilen Verbindung modifiziert ist.

2. Modifiziertes Polyacetylen nach Anspruch 1, dadurch gekennzeichnet, daß man als dienophile Verbindung Dichlormaleinsäureanhydrid, Dibrommaleinsäureanhydrid, Dichlormaleinsäureimid oder Dibrommaleinsäureimid, wobei der Stickstoff durch Alkyl-, Cycloalkyl- oder Arylgruppen mit bis zu 12 C-Atomen substituiert sein kann, einsetzt.

3. Modifiziertes Polyacetylen nach Anspruch 1, dadurch gekennzeichnet, daß man als dienophile Verbindung Chinon, Halogen- und Dihalogenchinon, wobei Halogen Chlor oder Brom ist, Aminochinon I und Triazolinderivate II verwendet,

I 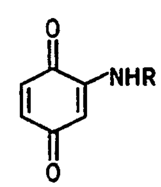

II 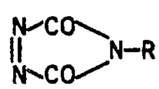

wobei R Wasserstoff oder Alkyl-, Cycloakyl- oder Arylgruppen mit bis zu 12 C-Atomen, die ihrerseits durch $NO_2$, Chlor oder Brom substituiert sein können, darstellt.

4. Verfahren zum Modifizieren von Polyacetylen, dadurch gekennzeichnet, daß man Polyacetylen mit einer dienophilen Verbindung umsetzt.

5. Verwendung von modifiziertem Polyacetylen nach einem der Ansprüche 1 bis 4 zur Herstellung von Formkörpern durch thermoplastische Verarbeitung.